# EUROPEAN PATENT APPLICATION

(11) **EP 2 511 847 A1**
(43) Date of publication of application: **17.10.2012**
(21) Application number: 12160811.1
(22) Date of filing: 22.03.2012
(51) Int. Cl.: G06F 21/22

(54) **Automatic selection of routines for protection**

(30) Priority: 13.04.2011 US 201113086044
(71) Applicant: SafeNet, Inc., Belcamp, MD 21017 (US)
(72) Inventor: Zunke, Michael, 85551 Kirchheim (DE); Lange, Andreas, 82256 Fuerstenfeldbruck (DE); Elteto, Laszlo, Irvine, CA California 92606 (US)
(74) Representative: Anderson, Angela Mary

(57) **Abstract**

An apparatus, computer readable medium, and method of protecting an application, the method including responding to receiving a level of security for the application by evaluating each of a plurality of routines of the application to generate an evaluation for each of the plurality of routines of the application; selecting a number of the plurality of routines to protect based on the evaluation for each of the plurality of routines and the received level of security; and protecting the selected number of the plurality of routines.

## Description

### FIELD

The invention relates to methods, apparatuses, and computer readable medium for automatically selecting portions of an application for protection.

### BACKGROUND

In the discussion of the background that follows, reference is made to certain structures and/or methods. However, the following references should not be construed as an admission that these structures and/or methods constitute prior art. Applicants expressly reserve the right to demonstrate that such structures and/or methods do not qualify as prior art.

Portions of the functionality of an application may need to be secure. For example, for an application that includes copy protection to prevent illegal copies of the application from being made, it may be necessary that the portion of the program that prevents illegal copies from being made is secure.

However, hackers have become proficient at reverse engineering the source code of the application to determine the functionality of the application. Often, the hacker may employ a software tool that takes executable code and creates source code, or the hacker may use another software tool that allows the hacker to watch each instruction of the application being executed.

One way to make it more difficult for hackers to reverse engineer applications is called obfuscation of the source code. Obfuscation takes the source code of the application and makes it intentionally more complicated. However, obfuscation reduces the performance of the application because the obfuscation adds extra source code to the application. An obfuscated portion of source code may run as much as twenty times slower than an un-obfuscated portion of source code. There are more ways to protect the routine than obfuscation, but most the ways of protecting the source code share the common feature of slowing down execution of the application.

Protecting portions of the source code makes it more difficult for the source code to be reverse engineered, but not impossible. So, often more than just the critical portions of the application are obfuscated so that the hacker will not know which portions of the application to reverse engineer.

The selection of these decoy portions of the applications is often a tedious process that may require the valuable time of a highly paid professional. Often, a list of routines, which are portions of the application and written in source code, is presented to a user and the user selects which of the list should be protected. The selected routines are then protected. However, as further development occurs in the application the user may have to re-select the routines to use as decoys because new routines may be added. Additionally, the routines that the user selects may slow down the application significantly and it may be difficult for the user to tell without extensive testing whether or not the selected routines will slow the application down significantly.

### SUMMARY

Therefore, there is a need in the art for a method of protecting an application including a plurality of routines. The method including responding to receiving a level of security for the application by evaluating each of a plurality of routines of the application to generate an evaluation for each of the plurality of routines of the application; selecting a number of the plurality of routines to protect based on the evaluation for each of the plurality of routines and the received level of security; and protecting the selected number of the plurality of routines.

The method may include selecting at least one routine of the plurality of routines to protect; and wherein the evaluation for each of the plurality of routines of the application is further based on how well each of the plurality of routines would act as a decoy for the selected at least one routine.

The level of security may be a percentage of the application to protect.

Protecting may include protecting the selected routines by obfuscating the selected number of the plurality of routines.

The method may include performing performance tests of the application with the selected number of the plurality of routines unprotected to generate an unprotected performance measure; performing performance tests of the application with the selected number of the plurality of routines protected to generate a protected performance measure; comparing the protected performance measure with the unprotected performance measure; and if the comparison indicates that the protected performance measure has degraded the unprotected performance measure below a predetermined performance degradation measure, then returning to the step of selecting a number of the plurality of routines.

At least one of the following metrics may be computed for each of the plurality of routines: a size of the routine, a complexity of the routine based on the number of branches in the routine; a position of the routine in a call graph of the application; a number of calls to the routine, a number of loops in the routine, and an upper bound on the number of times loops of the routine will execute based on boundary conditions of the loops.

Routine with a small size may be determined to be not eligible to be selected for protection.

A system for protecting an application is disclosed. The system includes an evaluate routine configured to evaluate routines of an application to generate evaluations; a select routines configured to select routines based on the evaluations and a level of security; and a protect routines configured to protect the selected routines.

At least one routine of the plurality of routines may be selected to protect; and wherein the evaluation routine may further configured to evaluate routines of the application based on how well the routines would act as a decoy for the selected at least one routine of the plurality of routines.

The level of security may be a percentage of the application to protect.

The protect routine may be further configured to protect the selected routines by obfuscating the selected routines.

The system may include a performance tester configured to perform performance tests of the application with the selected number of the plurality of routines unprotected to generate an unprotected performance measure, perform performance tests of the application with the selected number of the plurality of routines protected to generate a protected performance measure, and compare the protected performance measure with the unprotected performance measure; and configured to re-select a number of the plurality of routines, if the comparison indicates that the protected performance measure has degraded the unprotected performance measure below a predetermined performance degradation measure.

At least one of the following metrics may be computed for each of the plurality of routines: a size of the routine, a complexity of the routine based on the number of branches in the routine; a position of the routine in a call graph of the application; a number of calls to the routine, a number of loops in the routine, and an upper bound on the number of times loops of the routine will execute based on boundary conditions of the loops.

A routine with a small size may be determined not to be eligible to be selected for protection.

A non-transitory computer readable recording medium having embodied thereon a method of controlling a computer for protecting an application is disclosed. The method including responding to receiving a level of security for the application by evaluating each of a plurality of routines of the application to generate an evaluation for each of the plurality of routines of the application; selecting a number of the plurality of routines to protect based on the evaluation for each of the plurality of routines and the received level of security; and protecting the selected number of the plurality of routines.

### BRIEF DESCRIPTION OF THE DRAWING

The following detailed description can be read in connection with the accompanying drawings in which like numerals designate like elements and in which:

FIG. 1 illustrates a system for protecting an application according to an embodiment of the invention;

FIG. 2 illustrates the operation of evaluate routine of FIG. 1;

FIG. 3 illustrates the operation of select routine of FIG. 1;

FIG. 4 illustrates the operation of protect routines of FIG. 1;

FIG. 5 illustrates the operation of performance tester of FIG. 1;

FIG. 6 illustrates a method for protecting an application according to an embodiment of the invention; and

FIG. 7 illustrates a computer system.

### DETAILED DESCRIPTION

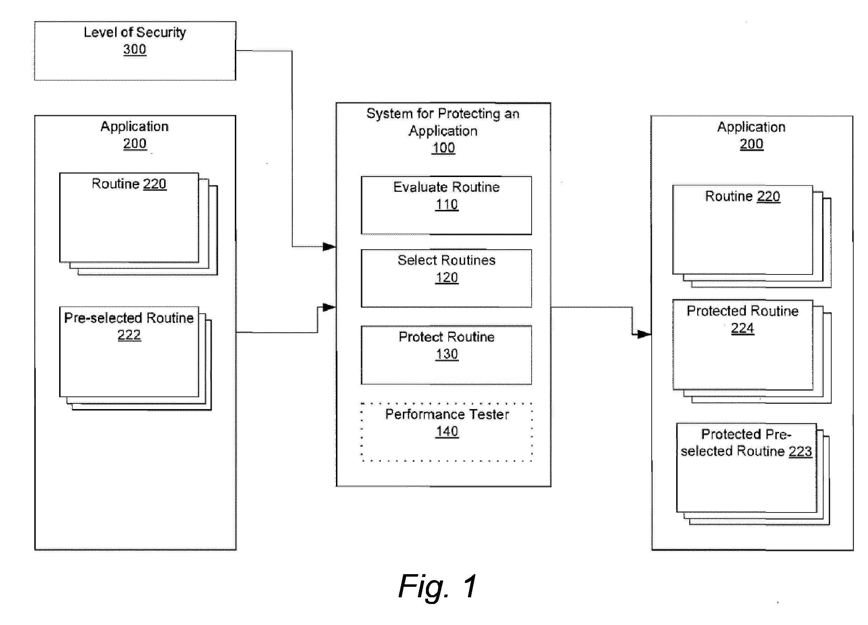

FIG. 1 illustrates a system for protecting an application 100. The system 100 takes an application 200 and a level of security 300 and selects routines 220 of the application 200 and protects some of the routines 220 of the application 200 to generate protected routines 224. The system for protecting an application 100 includes the following modules evaluate routine 110, select routines 120, protect routine 130, and may include performance tester 140.

The application 200 may include a number of routines 220. Some of the routines 220 may be pre-selected routines 222. The pre-selected routines 222 may be protected or pre-selected for protection to secure the functionality of the pre-selected routines 220 from hackers. The system 100 may select addition routines 220 to protect to act as decoys so that the hacker will not know which routines to attempt to reverse engineer.

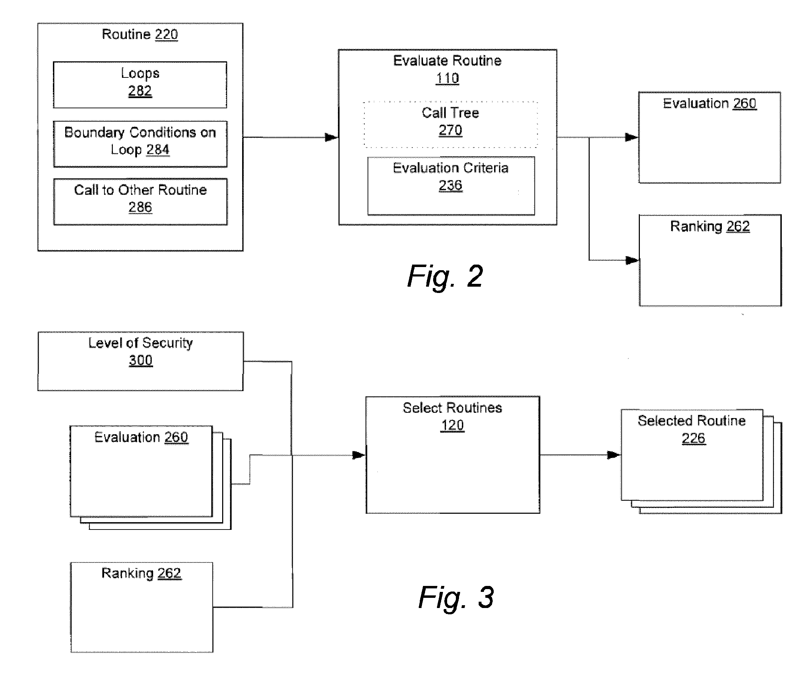

Evaluate routine 110 evaluates a routine 220 to determine how suitable a routine 220 is for protecting. In an embodiment, evaluate routine 110 generates a ranking 262 (see FIG. 2) of the routines with the routines 220 at the front of the ranking being the routines 220 that are most suited for protecting. Evaluate routines 220 may evaluate how well a routine 220 is suited for protecting based on estimating the performance degradation that will occur to the application 200 if the routine 220 is protected. Evaluate routine 110 is discussed further below.

Select routines 120 selects the routines 220 to protect based on the evaluation of the routines 220 generated by evaluate routine 110 and the level of security 300. For example, the level of security 300 may be a percentage of the routines 220 to add protection to. Select routines 120 may then select the routines 220 to protect based on the ranking generated by evaluate routines 110 and the percentage of the routines 220 to add protection to. So, if there were three hundred routines 220 in the application 200 and the level of security 300 indicated that five percent of the routines 220 should be protected, then select routines 120 would select the top five percent of the routines or the top fifteen routines in the ranking to be protected routines 224. Select routines 120 is discussed further below.

Protect routines 120 takes a routine 220 and protects the routine 220 to generate a protected routine 224. For example, protect routine 120 may take a routine 220 and obfuscate the routine 220. In embodiments, protect routines 120 takes a pre-selected routine 222 and protects the pre-selected routine 222 to generate a protected pre-selected routine 223. Protect routines 120 is discussed further below.

Performance tester 140 tests the performance of the application 200. Performance tester 140 may execute the application before routines 220 are protected and after routines 220 are protected to determine how much the protected routines 224 degraded the performance of the application 200. In embodiments, the system 100 may determine that the performance degradation of the application 200 has been slowed down too much by the protected routines 224. To correct the excessive degradation, the system 100 may select different routines 220 to protect. This may be an iterative process to select routines 220 that do not unacceptably degrade the performance of the application 200. Performance tester 140 is discussed further below.

The level of security 300 is a measure of how much security is to be added to the application 200. The level of security 300 may be received from a user or from another application. The level of security 300 may be expressed in different ways. Some examples of how the level of security 300 may be expressed are: a percentage of routines 220 to protect, a percentage of the source code of the application to protect, and a multiple of the pre-selected routines 222 to protect.

FIG. 2 illustrates the operation of evaluate routine 110. Evaluate routine 110 takes a routine 220 and evaluates the routine 220 to generate an evaluation 260. The evaluation 260 may be a number that indicates how suitable the routine 220 is for protecting. Evaluate routine 110 may generate the evaluation 260 based on calculating a number of metrics of the routine 220. Evaluate routine 110 may generate a ranking 262 where the routines 220 are ranked according to how suitable the routines 220 are for protecting.

Evaluate routine 110 may evaluate a routine 220 based on at least the following: estimating the performance degradation to the application 200 caused by adding protection to the routine 220, estimating how good a decoy routine the routine 220 will be for the pre-selected routine(s) 222, and estimating how important it is to protect the functionality of the routine 220.

Evaluate routine 110 may calculate many different metrics for a routine 220 to estimate the performance degradation to the application 200 that will be caused by adding protection to the routine 220. The following are some of the metrics. Evaluate routine 110 may calculate the size of the routine, which may be calculated in many different ways including a number of instructions in an executable version of the routine or a number of lines of the source code of the routine. Evaluate routine 110 may calculate a complexity of the routine which may be based on a number of loops 282, boundary conditions on loop 284, calls to other routines 286, and a number of branches in the routine 220 which may be calculated by counting the number of conditional statements in the routine 220. Evaluate routine 110 may generate or have another routine generate a call tree 270 of the application 200. The call tree 270 indicates which routines 220 and where routines 220 are called. The call tree 270 may be helpful in determining an expected amount of the execution of the application 200 the routine 220 will participate in. Evaluate routine 110 may calculated a position of the routine 220 in the call tree 270 and the number of references to the routine 220 in the call graph. For example, if the call tree 270 indicates that the routine 220 is only called at the beginning of the execution of the application 200 and the routine 220 does not make a call to other routines 220, then it may be that the routine 220 is not a large part of the execution of the application 200 and may be a good candidate for adding protection to. All of the above may be used to estimate the performance degradation to the application 200 that will be caused by adding protection to the routine 220.

Evaluate routine 110 may evaluate any of the metrics based on one or more of the different forms a routine 220 may take. For example, evaluate routine 110 may evaluate the source code of the routine 220, or may evaluate products generated from routine 220 such as p-code or executable code linked or unlinked which may have been generated from the source code of the routine 220.

Evaluate routine 110 may include rules such as that small routines should not be protected because they contain little or no functionality to hide, and because they tend to be easy for hackers to guess at the functionality. Moreover, small routines are often called frequently during the execution of the application so that protecting a small routine may have a large degradation on the performance of the application 200.

Evaluate routine 110 may generate a ranking 262 of the routines 220 in the application 200 ranked based on their suitability to be protected. Evaluate routine 110 may generate the ranking 262 by building a linear list of routines 220 sorted by the evaluation 260 generated for each routine 220.

Evaluate routine 110 may use an evaluation criteria 236 to evaluate the routines 220 for protection. For example, the evaluation 260 may include two numbers: one number for the expected degradation in performance if the corresponding routine 220 is protected and another number corresponding to how desirable it is to protect the functionality of the corresponding routine 220. Evaluate routines 110 may then evaluate the routines 220 to protect based on an evaluation criteria 236 where the desirability to protect the routine accounts for 70% of the evaluation criteria 236 and the expected degradation in the performance of the application accounts for 30% of the evaluation criteria 236.

FIG. 3 illustrates the operation of select routines 120. Select routines 120 takes the evaluations 260 and the level of security 300 and selects routines 220 to generate selected routines 226. For example, the evaluation 260 may be a number indicating the expected degradation in performance if the routine 220 corresponding to the evaluation 260 is protected, and level of security 300 may be a percent of the routines 220 to protect. Select routines 120 may select routines 220 with the lowest expected degradation in performance until the level of security 300 is satisfied. In embodiments, select routines 120 may select the best ranked 262 routines until the number of routines 220 selected meets the level of security 300 requirement.

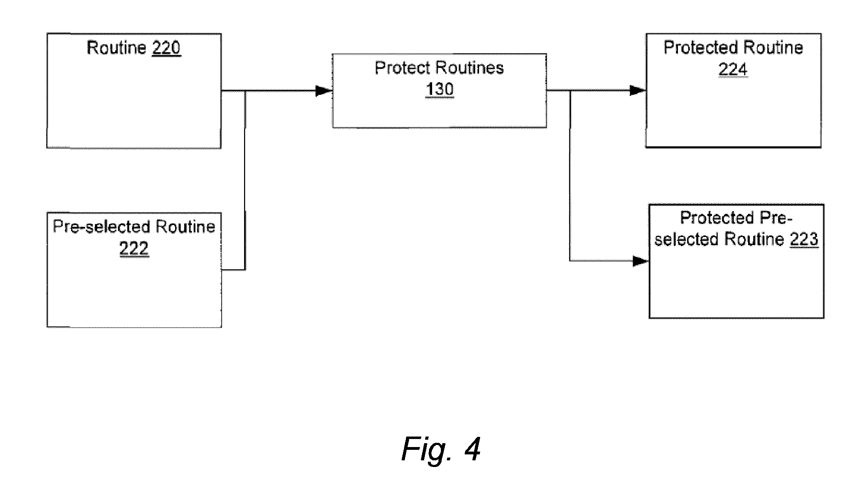

FIG. 4 illustrates the operation of protect routines 130. Protect routine 130 takes a routine 220 and protects the routine 220 to generate a protected routine 224. In an embodiment, protect routine 130 obfuscates the routine 220 to generate an obfuscated protected routine 224. Obfuscation is known in the art as a way to jumble the functionality of a routine 220 so that it is difficult for a hacker to reverse engineer the functionality of the routine 220. In embodiments, protect routine 130 takes a pre-selected routine 222 and protects the pre-selected routine 222 to generate a protected pre-selected routine 223. In an embodiment, protect routine 130 obfuscates the pre-selected routine 222 to generate an obfuscated protected pre-selected routine 223. In embodiments, one or more of the pre-selected routine(s) 222 is protected by either another application or manually by a developer to generate a protected pre-selected routine 223. The pre-selected routine(s) 222 may already be protected before the execution of the system for protecting an application 100.

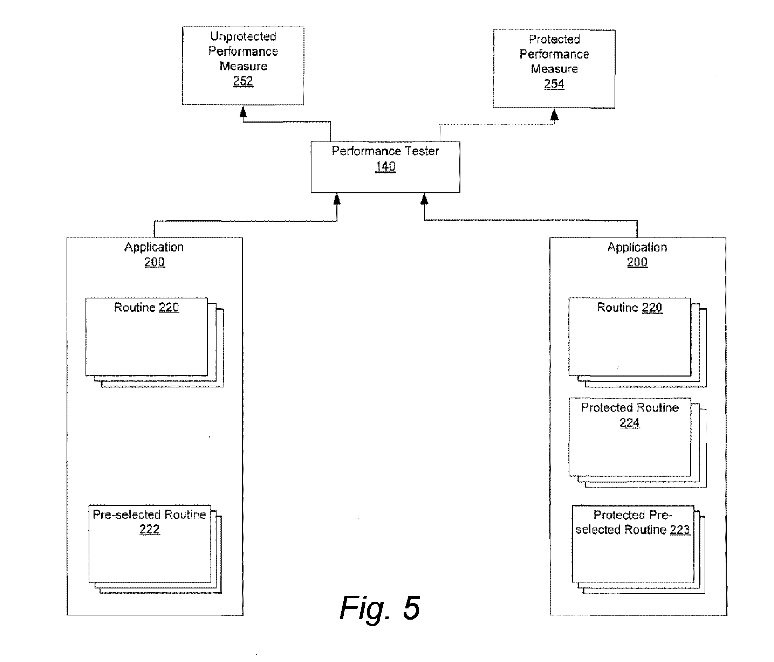

FIG. 5 illustrates the operation of performance tester 140. Performance tester 140 takes an application 200 without the protected routine 224 and performs a performance test on the application 200 to generate an unprotected performance measure 252. And, performance tester 140 takes an application 200 with the protected routines 224 and performs a performance test on the application 200 to generate a protected performance measure 254. The system for protecting an application 100 may compare the unprotected performance measure 252 with the protected performance measure 254 and if the performance of the application has degraded past a predetermined performance degradation measure which may be relative to the level of security 300, then the system 100 may determine new routines to protect and run the performance tests again. In embodiments, the performance tester 140 may identify routines 220 that degraded the performance of the application 200 past a predetermined amount and eliminate those routines from being included in the selection 260 and/or ranking 262 so that select routines 120 will not select those routines for protection.

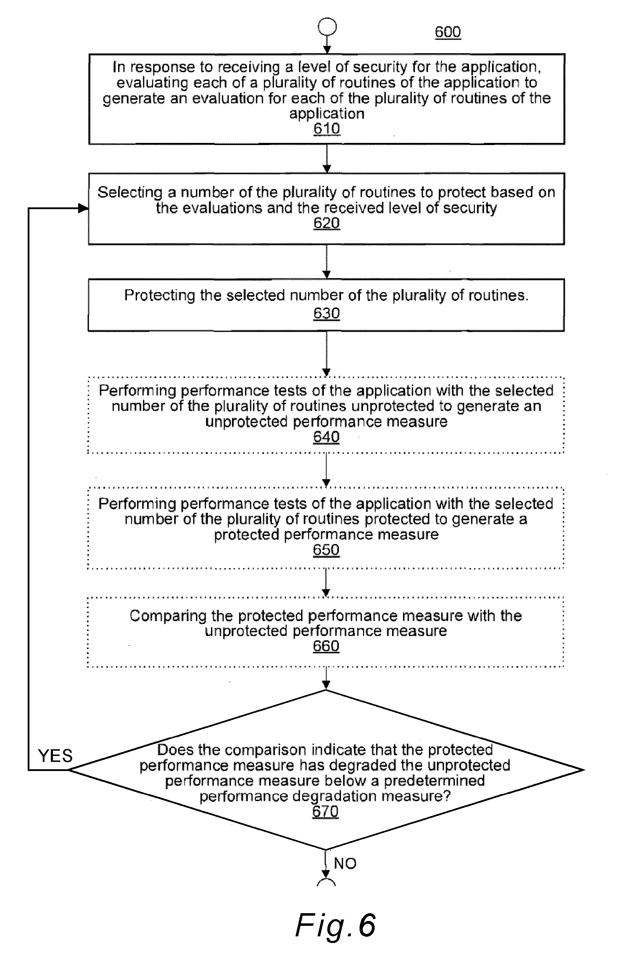

FIG. 6 illustrates a method for protecting an application 600. In the following discussion reference is made to FIGS. 1-5. The method begins at 610 with in response to receiving a level of security for the application, evaluating each of a plurality of routines of the application to generate an evaluation for each of the plurality of routines of the application. For example, the system for protecting an application 100 may receive a level of security 300 that indicates that twenty percent of the routines should be protected. Evaluate routines 110 may evaluate the routines 220 of the application 200.

The method continues at 620 with selecting a number of the plurality of routines to protect based on the evaluations and the received level of security. For example, select routines 120 may select the routines to protect based on the evaluations of the routines generated by evaluate routine 110 and based on the level of security 300. Select routines 120 may, for example, select the best ranked 262 routines until the number of routines 220 selected meets the level of security 300 requirement.

The method continues at 630 with protecting the selected number of the plurality of routines. For example, protect routine 130 may take each of the selected routines 226 and obfuscate the selected routines 226 to generate the protected routine 224.

The method may either terminate, or optionally, the method continues at 640 with performing performance tests of the application with the selected number of the plurality of routines unprotected to generate an unprotected performance measure. For example, the performance tester 140 may perform a performance test of the application 200 without the protected routines 224 to generate a unprotected performance measure 252.

The method may continue 650 with performing performance tests of the application with the selected number of the plurality of routines protected to generate a protected performance measure. For example, the performance tester 140 may perform a performance test of the application 200 with the protected routines 224 to generate a protected performance measure 254.

The method may continue at 670 with does the comparison indicate that the protected performance measure has degraded the unprotected performance measure below a predetermined performance degradation measure? For example, the system for protecting an application 100 may determine whether the comparison indicates that the protected performance measure has degraded the unprotected performance measure below a predetermined performance degradation measure, in which case the answer is "YES" and the method may return to step 620 where the routines are re-selected. The method may return to step 620 rather than step 610 because re-doing the evaluations may be time consuming. If the comparison indicates that "NO" the protected performance measure has NOT degraded the unprotected performance measure below a predetermined performance degradation, then the method may terminate.

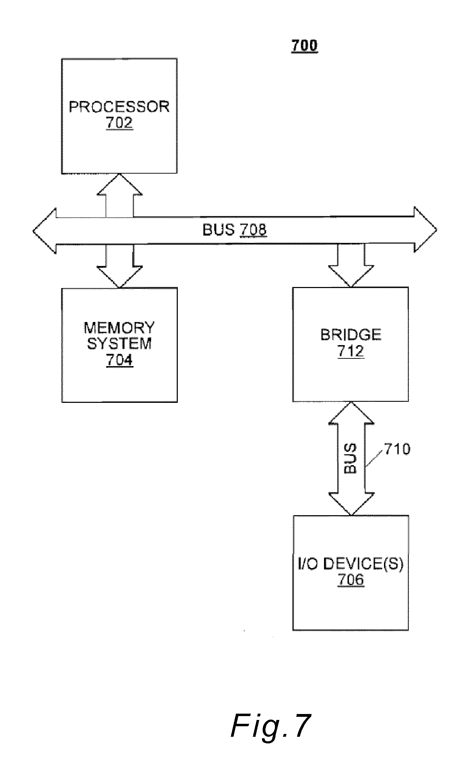

FIG. 7 illustrates a computer system 700 which includes a processor 702, a memory system 704 and one or more input/output (I/O) devices 706 in communication by a communication "fabric." The communication fabric can be implemented in a variety of ways and may include one or more computer buses 708, 710 and/or bridge devices 712 as shown in FIG. 7. The I/O devices 706 can include network adapters and/or mass storage devices. Referring to FIGS. 1 and 7, the computer system 700 may be executing methods according to the system for protecting an application 100 and may receive a level of security 300 over the I/O devices 706. For example, a user may enter a level of security 300 from a computer keyboard. The system for protecting an application 200 may include a number of modules and/or routines that may reside locally or remotely on a memory system 704 or mass storage device 706 that is accessible via the communication fabric. For example, the module and/or routines may be either local such as a hard disk in the same room as the processor 702 or may be located remotely such as in a memory system such as a hard disk remotely located in a service center. An application 200 can be stored in the memory system 704 or a mass storage device 706, which may also either be local or remote. The system for protecting an application 200 may receive input from a user and may display output on the I/O devices 706, which may include keyboards, mice, displays, etc. The communication fabric may be in communication with many networks including the Internet and local area networks.

The modules or routines described in connection with the embodiments disclosed herein may be implemented with a different number of modules or routines where the functionality described herein is divided between a fewer or greater number of modules or routines. Additionally, the modules or routines may reside either locally or remotely and may make either remote or local calls to implement the functionally described above.

The various illustrative routines or modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but, in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

Further, the steps and/or actions of a method or algorithm described in connection with the aspects disclosed herein may be embodied directly in hardware, in a software module executed by a processor, or in a combination of the two. A software module may reside in RAM memory, flash memory, ROM memory, EPROM memory, EEPROM memory, registers, a hard disk, a removable disk, a CD-ROM, or any other form of storage medium known in the art. An exemplary storage medium may be coupled to the processor, such that the processor can read information from, and write information to, the storage medium. In the alternative, the storage medium may be integral to the processor. Further, in some aspects, the processor and the storage medium may reside in an ASIC. Additionally, the ASIC may reside in a user terminal. In the alternative, the processor and the storage medium may reside as discrete components in a user terminal. Additionally, in some aspects, the steps and/or actions of a method or algorithm may reside as one or any combination or set of instructions on a machine readable medium and/or computer readable medium, which may be in a physical form.

Although described in connection with preferred embodiments thereof, it will be appreciated by those skilled in the art that additions, deletions, modifications, and substitutions not specifically described may be made without departure from the spirit and scope of the invention as defined in the appended claims.

## Claims

1. A method of protecting an application comprising a plurality of routines, the method comprising:
in response to receiving a level of security for the application,
evaluating each of a plurality of routines of the application to generate an evaluation for each of the plurality of routines of the application;
selecting a number of the plurality of routines to protect based on the evaluation for each of the plurality of routines and the received level of security; and
protecting the selected number of the plurality of routines.

2. The method of claim 1, further comprising:
selecting at least one routine of the plurality of routines to protect; and wherein the evaluation for each of the plurality of routines of the application is further based on how well each of the plurality of routines would act as a decoy for the selected at least one routine.

3. The method of claim 1, wherein the level of security is a percentage of the application to protect.

4. The method of claim 1, wherein protecting comprises:
protecting the selected routines by obfuscating the selected number of the plurality of routines.

5. The method of claim 1, further comprising:
performing performance tests of the application with the selected number of the plurality of routines unprotected to generate an unprotected performance measure;
performing performance tests of the application with the selected number of the plurality of routines protected to generate a protected performance measure;
comparing the protected performance measure with the unprotected performance measure; and
if the comparison indicates that the protected performance measure has degraded the unprotected performance measure below a predetermined performance degradation measure, then returning to the step of selecting a number of the plurality of routines.

6. The method of claim 1, wherein at least one of the following is calculated to determine the evaluation for each of the plurality of routines: a size of the routine, a complexity of the routine based on the number of branches in the routine; a position of the routine in a call graph of the application; a number of calls to the routine, a number of loops in the routine, and an upper bound on the number of times loops of the routine will execute based on boundary conditions of the loops.

7. The method of claim 1, wherein routines with a small size are not selected for protection.

8. A system for protecting an application, the system comprising:
an evaluate routine configured to evaluate routines of an application to generate evaluations;
a select routines configured to select routines based on the evaluations and a level of security; and
a protect routines configured to protect the selected routines.

9. The system for protecting an application of claim 8, wherein at least one routine of the plurality of routines is selected to protect; and wherein the evaluation routine is further configured to evaluate routines of the application based on how well the routines would act as a decoy for the selected at least one routine of the plurality of routines.

10. The system for protecting an application of claim 8, wherein the level of security is a percentage of the application to protect.

11. The system for protecting an application of claim 8, wherein the protect routines is further configured to protect the selected routines by obfuscating the selected routines.

12. The system for protecting an application of claim 8, further comprising:
a performance tester configured to perform performance tests of the application with the selected number of the plurality of routines unprotected to generate an unprotected performance measure, perform performance tests of the application with the selected number of the plurality of routines protected to generate a protected performance measure, and compare the protected performance measure with the unprotected performance measure; and configured to re select a number of the plurality of routines, if the comparison indicates that the protected performance measure has degraded the unprotected performance measure below a predetermined performance degradation measure.

13. The system for protecting an application of claim 8, wherein at least one of the following is calculated to determine the evaluation for each of the plurality of routines: a size of the routine, a complexity of the routine based on the number of branches in the routine; a position of the routine in a call graph of the application; a number of calls to the routine, a number of loops in the routine, and an upper bound on the number of times loops of the routine will execute based on boundary conditions of the loops.

14. The system for protecting an application of claim 8, wherein routines with a small size are not selected for protection.

15. A non-transitory computer readable recording medium having embodied thereon a method of controlling a computer for protecting an application, the method comprising:
responding to receiving a level of security for the application by evaluating each of a plurality of routines of the application to generate an evaluation for each of the plurality of routines of the application;
selecting a number of the plurality of routines to protect based on the evaluation for each of the plurality of routines and the received level of security; and
protecting the selected number of the plurality of routines.
